# EUROPÄISCHE PATENTSCHRIFT

(11) **EP 1 033 270 B1**
(45) Veröffentlichungstag und Bekanntmachung des Hinweises auf die Patenterteilung: **30.06.2004**
(21) Anmeldenummer: 00102364.7
(22) Anmeldetag: 04.02.2000
(51) Int. Cl.: B60J 1/18, B60J 7/12, B60J 10/10

(54) **Klappverdeck für Kraftfahrzeuge mit einem äusseren Verdeckbezug und einem Himmel sowie mit mindestens einer im äusseren Verdeckbezug angeordneten Scheibe**
Foldable top for motor vehicle provided with an exterior top cover and a roof lining provided with at least a glass panel on the exterior top cover
Toit pliant pour véhicule automobile avec un élément de couverture extérieur et un revêtement de toit et avec l'élément de couverture equipé au moins d'un panneau en vitre

(30) Priorität: 03.03.1999 DE 19909275
(43) Veröffentlichungstag der Anmeldung: 06.09.2000
(73) Patentinhaber: PARAT Automotive, Schönenbach GmbH + Co. KG, 42897 Remscheid (DE)
(72) Erfinder: Schönenbach, Heinz, 42897 Remscheid (DE)
(74) Vertreter: Patentanwälte Ostriga & Sonnet

(56) Entgegenhaltungen:
- DE-C- 669 585
- US-A- 3 501 196
- US-A- 5 511 884

## Beschreibung

Die Erfindung betrifft ein Klappverdeck nach dem Oberbegriff des Anspruchs 1.

Die Erfindung befaßt sich mit dem Problem der Anbindung des inneren Verdeckbezugs im Bereich von im Klappverdeck angeordneten Scheiben. Darunter ist primär die Heckscheibe zu verstehen; es ist aber auch denkbar, daß bei künftigen Verdeckkonstruktionen möglicherweise auch im Dachbereich eine Scheibe angeordnet sein könnte. Jedenfalls besitzt der Himmel einen in sich geschlossen umlaufenden oder teilumlaufenden Ausschnitt im Scheibenbereich, und hier gilt es, eine technisch einfache und optisch ansprechende Lösung zu finden.

Im Stand der Technik ist es z.B. bekannt, den Himmel im Bereich der Heckscheibe mittels eines Reißverschlusses zu fixieren. Dieser Reißverschluß muß einerseits am Himmelausschnitt und andererseits mit dem äußeren Verdeckstoff im Scheibenrandbereich vernäht oder verklebt sein. Dies ist aufwendig, und auch die Optik ist nicht besonders ansprechend. Ein ganz wichtiges Kriterium in diesem Zusammenhang ist auch das Ablageverhalten des Verdecks nach dem vollständigen Öffnen. Hierbei kann ein Reißverschluß durchaus hinderlich sein.

Des weiteren ist im Stand der Technik eine Konstruktion bekannt, bei der der innere Verdeckstoff in seinem Randbereich auf ein Aluminiumprofil aufgeschweißt ist, welches mittels einer Kunststoffleiste am Scheibenrahmen angeschraubt wird. Diese Konstruktion ist umständlich und kostenintensiv und befriedigt deshalb ebenfalls nicht.

Eingattungsgemäßes Klappverdeck ist aus Dokument US 3 501 196 bekannt.

Ausgehend von diesem Stand der Technik liegt daher der Erfindung die Aufgabe zugrunde, ein Klappverdeck der vorausgesetzten Art zu schaffen, welches sich durch eine besonders vorteilhafte Himmelanbindung im Scheibenbereich auszeichnet.

Die Erfindung löst diese Aufgabe zum einen mit den kennzeichnenden Merkmalen des Anspruchs 1 und ist dementsprechend dadurch gekennzeichnet, daß die Scheibe mit dem äußeren Verdeckstoff mittels eines Gießharz-Wulstelements mechanisch fest und dicht verbunden ist, welches den Rand des Ausschnitts im äußeren Verdeckbezug und den Rand der Scheibe einfaßt und daß der innere Verdeckbezug mit seinem Rand zumindest über einen Teilabschnitt des Wulstelements parallel oder mit dem Rand eines in ihm vorgesehenen Ausschnitts umlaufend zu diesem geführt ist und mittels Steckverbindungselementen an dem Wulstelement fixiert ist.

Eine vergleichbare andere Lösung besteht darin, daß die Scheibe mit dem äußeren Verdeckstoff mittels lösbar miteinander verbundener Gießharz-Wulstelemente mechanisch fest und dicht verbunden ist, von denen ein erstes Wulstelement den Rand der Scheibe und ein zweites Wulstelement den Ausschnittsrand des äußeren Verdeckbezugs einfaßt und daß der innere Verdeckbezug mit seinem Rand zumindest über einen Teilabschnitt des ersten Wulstelements parallel oder mit dem Rand eines in ihm vorgesehenen Ausschnitts umlaufend zu diesem geführt ist und mittels Steckverbindungselementen an dem ersten Wulstelement fixiert ist.

Der Unterschied der beiden Lösungen besteht im wesentlichen darin, daß die erste Lösung auf Verdecke mit Scheiben ausgerichtet ist, die mittels eines einteiligen Gießharz-Wulstelement im äußeren Verdeckstoff befestigt sind, während die zweite Lösung auf eine auswechselbare Scheibenanordnung mittels zweier miteinander lösbar verbundener Wulstelemente zielt, von denen eines den Scheibenrahmen und daß das andere den Rahmen eines Ausschnitts im äußeren Verdeckstoff ausbildet.

In beiden Fällen hat die erfindungsgemäße Lösung zum einen den grundsätzlichen Vorteil, daß infolge der Gießharz-Wulstelemente ein äußerst sauberer und absolut dichter Scheibenrand erzielt wird, was allerdings aufgrund der DE 197 24 592 C1 bei einer einteiligen Ausführung grundsätzlich bekannt ist. Zum anderen besteht der Pfiff der Erfindung im wesentlichen darin, den Gießharz-Scheibenrahmen selbst und unmittelbar zum Anheften des zugehörigen Ausschnittsrandes des inneren Verdeckstoffes heranzuziehen. Damit gelingt es, den Himmel paßgenau an den Scheibenrahmen anzubinden, so daß optisch der Eindruck entsteht, die Scheibe sei in den Himmel eingelassen. Ein weiterer Vorteil besteht darin, daß die Steckverbindungselemente nach Art von Druckknöpfen als wiederlösbare Elemente ausgeführt sein können, so daß es jederzeit möglich ist, z.B. zu Wartungs- oder Reparaturzwecken den Himmel "abzuknöpfen". Infolge der unmittelbaren und dichten Zuordnung des inneren Verdeckbezugs zum Scheibenrahmen ist auch ein einwandfreies Ablegen des Verdecks beim Öffnen jederzeit gewährleistet. Schließlich handelt es sich um eine ausgesprochen kostengünstige Konstruktion.

Bei einer vorteilhaften Ausführungsform der Erfindung weisen die Steckverbindungselemente verdeckstoffseitig wenigstens ein patrizenartiges Steckorgan auf, und in dem Wulstelement ist wenigstens eine Steckaufnahme angebracht. In diesem Zusammenhang ist es vorteilhaft, wenn das wenigstens eine Steckorgan an einem mit dem inneren Verdeckbezug randnah verbundenen Leistenelement angeordnet ist, welches als zumindest teilweise dem Scheibenrandverlauf sowie dessen innerer Raumwölbung folgender Bügel ausgebildet ist, der in eine im wesentlichen schlaufen- oder taschenartige Aufnahme des Randes oder Ausschnitts des inneren Verdeckbezugs eingearbeitet ist. Das patrizenartige Steckorgan kann sich über die gesamte Länge eines Leistenelements gewissermaßen als Rippe hinwegerstrecken, wenngleich es sich empfiehlt, über die Länge des Leistenelements hinweg mehrere einzelne Steckorgananordnungen anzuordnen. Ein wesentlicher Vorteil hiervon besteht z.B. darin, daß entsprechend das Wulstelement keine es möglicherweise schwächenden durchgehende Steckaufnahme, sondern nur partiell in Abständen voneinander vorgesehene Steckaufnahmen aufweist.

Weitere Vorteile der Erfindung ergeben sich aus den bislang nicht zitierten Unteransprüchen sowie aus der nachfolgenden Beschreibung von Ausführungsbeispielen. Es zeigen:
- Fig. 1: eine Innenansicht auf einen Heckscheibenbereich eines Fahrzeugverdecks,
- Fig. 2: eine perspektivische Darstellung eines im inneren Verdeckbezug anzuordnenden Leistenelements,
- Fig. 3: eine Fig. 2 entsprechende Darstellung, jedoch mit angedeutetem Himmelstoff,
- Fig. 4: einen Querschnitt entsprechend der Schnittangabe IV-IV in Fig. 3,
- Fig. 5: eine perspektivische Darstellung des Inhaltes der Fig. 4,
- Fig. 6: einen Detailquerschnitt entsprechend der Schnittangabe VI-VI in Fig. 1 bezüglich einer ersten Ausführungsform,
- Fig. 7: eine der Fig. 6 entsprechende Darstellung (seitenverdreht) einer Ausführungsform zur Verwendung im Zusammenhang mit einer auswechselbaren Scheibe,
- Fig. 8: eine Darstellung einer weiteren Ausführungsform,
- Fig. 9: eine perspektivische Darstellung der bei der Ausführungsform in Fig. 8 verwendeten Klammer und eines Ausschnitts des mit der Klammer zu verbindenden verdeckstoffseitigen Leistenelements.

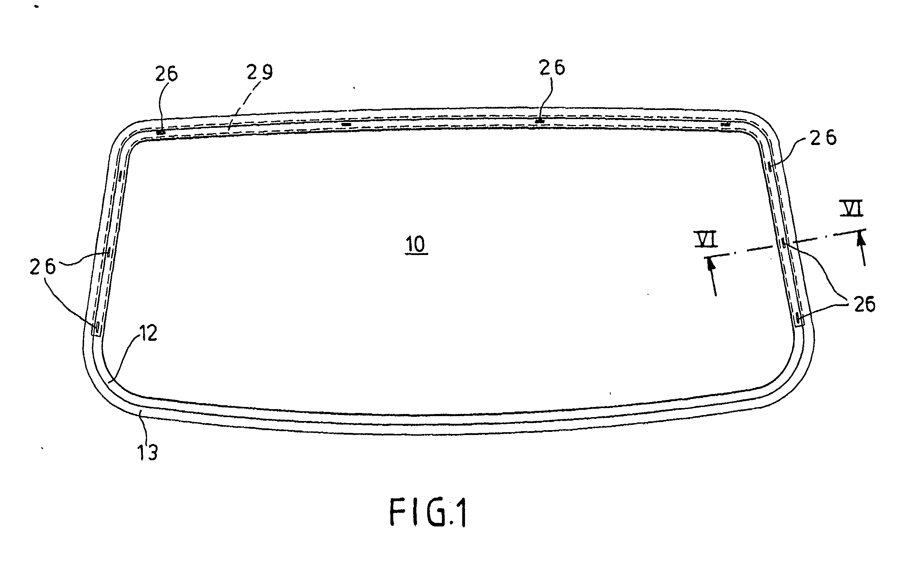

Fig. 1 zeigt mit Blickrichtung aus dem Fahrzeuginnenraum eine Scheibe 10, und zwar die Heckscheibe eines Kabrioletts. Der Rand der Scheibe 10 ist ringsum von einem PUR-Gießharz-Wulstelement 12 eingefaßt. Vom äußeren Verdeckbezug 13 ist nur ein umlaufender schmaler Streifen dargestellt. Der Rand des im Verdeckbezug 13 angebrachten Ausschnitts ist von demselben oder einem zweiten PUR-Gießharz-Wulstelement eingefaßt.

Das die Scheibe 10 rahmenartig einfassende Wulstelement 12 besitzt längs der seitlichen Scheibenränder und längs des oberen Scheibenrandes in Abständen angeordnete Steckaufnahmen 26, die mit später noch zu beschreibenden patrizenartigen Steckorganen, die am hier nicht dargestellten inneren Verdeckbezug, dem Himmel, angeordnet sind, als Steckverbindungselemente zusammenwirken. Die patrizenartigen Steckorgane sind himmelseitig an einem im wesentlichen U-förmigen Bügel 29 angeordnet, der in Fig. 1 strichpunktiert angedeutet ist, damit seine im wesentlichen deckungsgleiche Zuordnung zum scheibenseitigen Wulstelement 12 erkennbar wird.

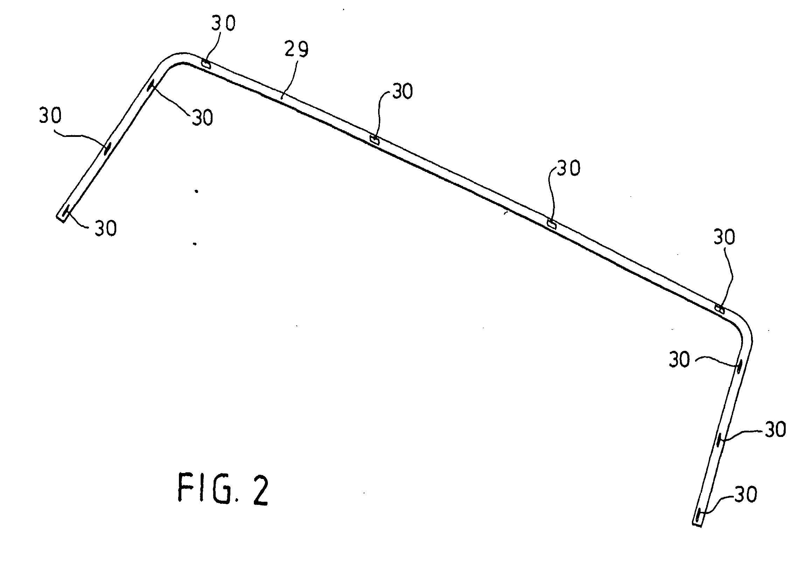

Das bügelförmige Leistenelement 29, welches aus insbesondere faserverstärktem Kunststoff oder selbstverständlich auch aus Metall bestehen kann, ist noch gesondert in Fig. 2 dargestellt. Erkennbar ist, daß es sich um eine flachrechteckige, zu einem U geformte Leiste handelt, aus deren Grundebene die einzelnen Steckorgane 30 vorstehen.

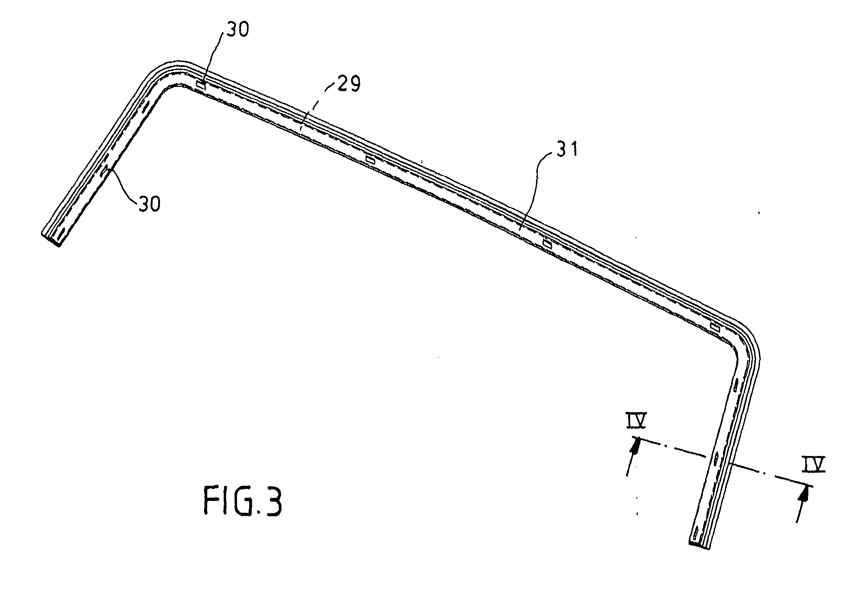

Fig. 3 zeigt das bügelförmige Leistenelement 29 eingebettet in einen Saum des ansonsten nur mit einem angrenzenden Streifen in Fig. 3 gezeigten inneren Verdeckbezugs 31.

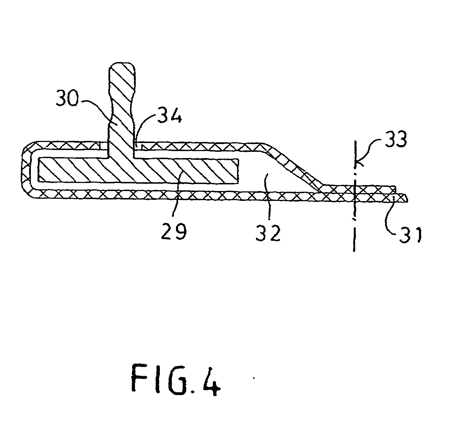

Fig. 4 zeigt einen Querschnitt entsprechend der Schnittlinie IV-IV in Fig. 3. Erkennbar ist hier, daß der scheibenseitige Rand des inneren Verdeckbezugs 31 einen Hohlsaum 32 ausbildet mit Hilfe eines Umschlags, der bei einer mit 33 bezeichneten Stelle fixiert, vorzugsweise vernäht ist. Der Hohlsaum 32 weist auf der zur Scheibe 10 weisenden Seite fensterartige Öffnungen 34 auf, die es dem im Hohlraum des Hohlsaums 32 eingebetteten Leistenelement 29 erlauben, die an ihm vorgesehenen patrizenartigen Steckorgane 30 aus dem Hohlsaum 32 austreten zu lassen.

Bei dem in Fig. 4 dargestellten Ausführungsbeispiel könnten die Steckorgane 30 einstückig-stoffschlüssig am Grundquerschnitt des Leistenelementes 19 angeformt sein, so daß hier ein einteiliges Kunststoff-Spritzgießteil vorliegen würde.

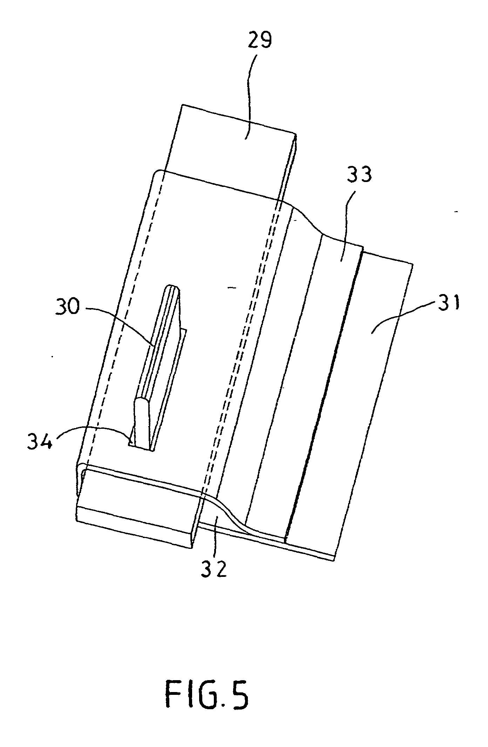

Fig. 5 zeigt die Teile entsprechend Fig. 1 nochmals in perspektivischer Darstellung.

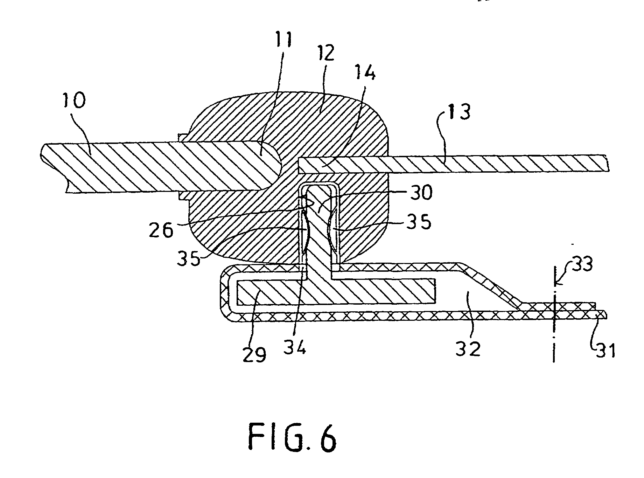

Fig. 6 ist ein Querschnitt entsprechend der Schnittlinie VI-VI in Fig. 1 und zeigt zusätzlich zu den bisher beschriebenen Elementen im wesentlichen noch folgendes: Die Glasscheibe 10 ist mit ihrem Rand 11 über ein PUR-Gießharz-Wulstelement 12 mit dem Ausschnittsrand 14 des äußeren Verdeckbezugs 13 fest und dicht verbunden. Das Wulstelement 12 weist die Steckaufnahmen 26 an seiner zum Fahrzeuginnenraum weisenden Seite auf. Zur besseren Verankerung der Steckorgane 30 sind in die Steckaufnahmen 26 vorzugsweise metallische Klammern 35 eingesetzt, und zwar insbesondere bei der Herstellung des Gießharz-Wulstelementes 12 in dieses mit eingegossen.

Im übrigen sollte die Anordnung zu Wartungs- und Reparaturzwecken wiederlösbar, insbesondere also im Sinne einer Art von Druckknopfverbindung ausgeführt sein. Bevorzugt sind die im Querschnitt im wesentlichen U-förmigen Klammern aus Metall geformt.

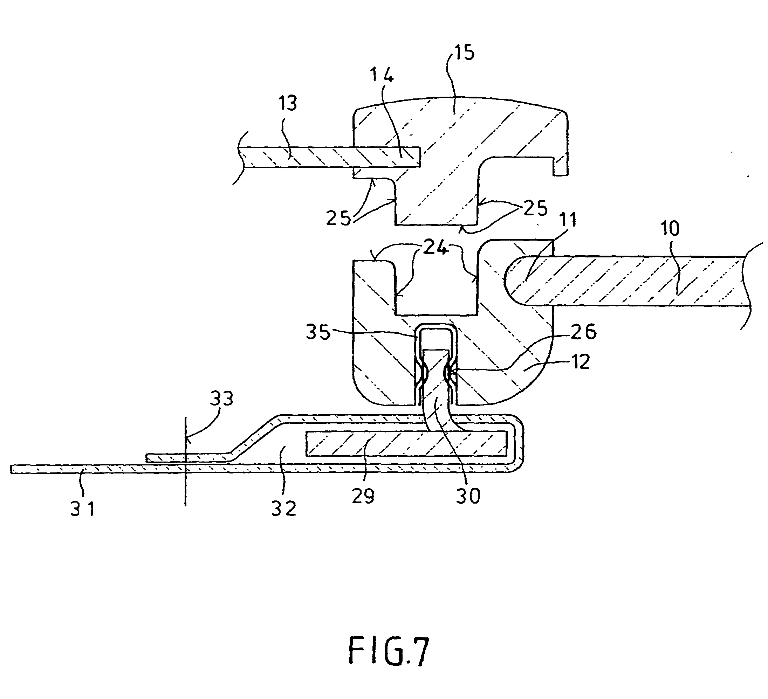

Fig. 7 zeigt eine Darstellung entsprechend Fig. 6, jedoch in einer modifizierten Ausführungsform. Diese unterscheidet sich von der nach Fig. 6 dadurch, daß der äußere Rand 11 der Scheibe 10 von einem ersten Wulstelement 12 rahmenartig umfaßt ist, wohingegen der Ausschnittsrand 14 des äußeren Verdeckbezugs 13 von einem zweiten PUR-Gießharz-Wulstelement 15 eingefaßt ist. Diese beiden Wulstelemente 12 und 15 weisen komplementär zueinander angeordnete und ausgerichtete Fügeflächen 24 und 25 auf, so daß sie - wie aus Fig. 7 erkennbar - nach Art einer Nut-Feder-Verbindung zusammengefügt werden können. Nicht dargestellte Verbindungsmittel, z.B. Verschraubungen, sichern diese beiden Rahmenteile in dichter, fester und bündiger Zuordnung zueinander.

Bezüglich der Anbindung des inneren Verdeckstoffs 31 ist die Anordnung ähnlich wie bei der vorbeschriebenen Ausführungsform ausgeführt. Zu erwähnen ist noch, daß die Darstellung in Fig. 7 zeigt, daß die Steckorgane 30 aus einem aus Metall bestehenden Streifenelement 29 ausgeklinkt und aus der Hauptebene vorstehend herausgeformt sind.

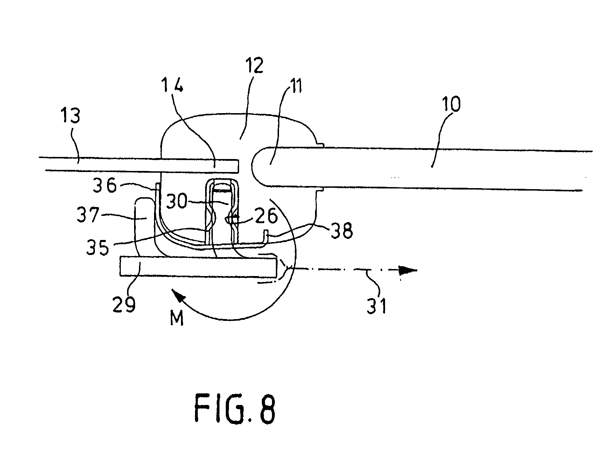

Fig. 8 zeigt eine Abwandlung der beschriebenen Klammer 35 und des Leistenelements 29. Hierbei ist wesentlich, daß die Klammer 35 mit wenigstens einem an der Außenfläche des Gießharz-Wulstelements 12 anliegenden Flanschelement 36 versehen ist, welches eine Anlagefläche für mindestens einen mit 37 bezeichneten Widerlagerabschnitt des Leistenelementes 29 bereitstellt.

Das Flanschelement 36 erstreckt sich um den zum inneren Verdeckstoff 13 hinführenden Rand des Wulstelementes 12 hinweg und bildet eine Anlage für den Widerlagerabschnitt 37. Wenn auf den in Fig. 8 nur schematisch dargestellten inneren Verdeckbezug 31 eine Kraft, z.B. die Spannkraft zum Straffhalten des Himmels ausgeübt wird, die sich in einem Moment M äußert, bilden die Teile 36 und 37 eine Momentenstütze aus. Dadurch ist der Zusammenhalt der Steckverbindung 30/35 gegen unbeabsichtigtes Lösen wesentlich sicherer. Zum anderen ist Gewähr dafür geleistet, daß das PUR-Material des Wulstelementes 12 nicht unmittelbar belastet und ggf. beschädigt wird.

Dem Flanschelement 36 jenseits der Klammer 35 gegenüberliegend ist noch ein mit einem abgewinkelten Schenkel 38 in das Wulstelement 12 eingreifender Verankerungsschenkel bezeichnet.

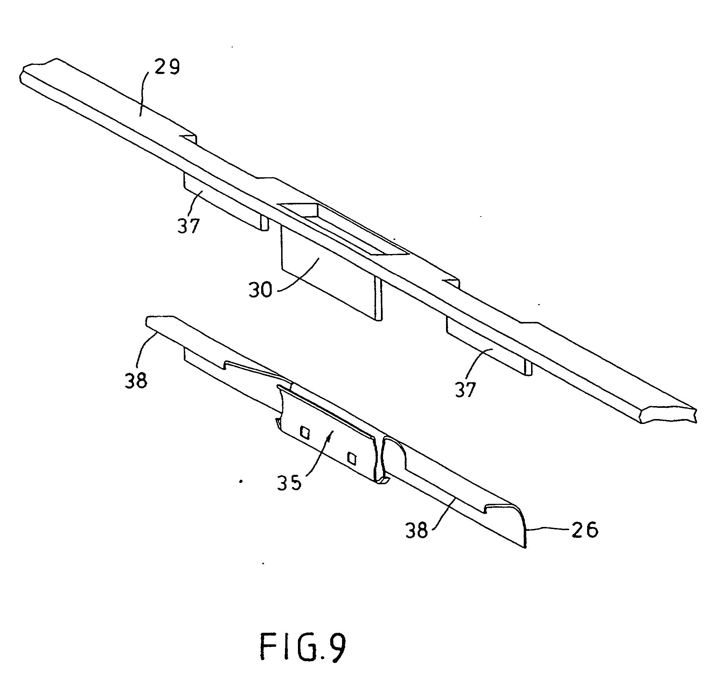

Fig. 9 zeigt eine bevorzugte Ausführungsform bezüglich der Gestaltung einer Klammer 35 und des mit ihr zusammenwirkenden Abschnitts eines Leistenelementes 29, wobei die Teile durch Stanzen und Verformen aus einem Metallblechstreifen erzeugt sind.

Diese Darstellung zeigt insbesondere, daß die Verankerungsabschnitte 38 zu jeweils einer Seite der Klammer 35 angeordnet, daß das Flanschelement 36 sich über die gesamte Länge eines "Klammerelements" hinwegerstreckt und daß sowohl der Steckzapfen 30 als auch die Widerlagerabschnitte 37, die mit dem Flanschelement 36 abstützend zusammenwirken, aus dem Blechstreifen des Leistenelementes 29 ausgeklinkt und im wesentlichen lotrecht aus der Grundebene herausgebogen sind.

## Patentansprüche

1. Klappverdeck für Kraftfahrzeuge wie Kabrioletts od.dgl., mit einem äußeren Verdeckbezug (13) und einem inneren Verdeckbezug (31), dem sogenannten Himmel, sowie mit mindestens einer in einem Ausschnitt des äußeren Verdeckbezugs (13) angeordneten Scheibe (10), **dadurch gekennzeichnet, daß** die Scheibe (10) mit dem äußeren Verdeckstoff (13) mittels eines Gießharz-Wulstelements (12) mechanisch fest und dicht verbunden ist, welches den Rand (14) des Ausschnitts im äußeren Verdeckbezug (13) und den Rand (11) der Scheibe (10) einfaßt und daß der innere Verdeckbezug (31) mit seinem Rand zumindest über einen Teilabschnitt des Wulstelements (12) parallel oder mit dem Rand eines in ihm vorgesehenen Ausschnitts umlaufend zu diesem geführt ist und mittels Steckverbindungselementen (26, 30) an dem Wulstelement (12) fixiert ist.

2. Klappverdeck nach dem Oberbegriff des Anspruchs 1, **dadurch gekennzeichnet, daß** die Scheibe (10) mit dem äußeren Verdeckstoff (13) mittels lösbar miteinander verbundener Gießharz-Wulstelemente (12, 15) mechanisch fest und dicht verbunden ist, von denen ein erstes Wulstelement (15) den Rand der Scheibe (10) und ein zweites Wulstelement (12) den Ausschnittsrand (14) des äußeren Verdeckbezugs (13) einfaßt und daß der innere Verdeckbezug (31) mit seinem Rand zumindest über einen Teilabschnitt des ersten Wulstelements (12) parallel oder mit dem Rand eines in ihm vorgesehenen Ausschnitts umlaufend zu diesem geführt ist und mittels Steckverbindungselementen (26, 30) an dem ersten Wulstelement (12) fixiert ist.

3. Klappverdeck nach Anspruch 1, **dadurch gekennzeichnet, daß** das Gießharz ein Polyurethan(PUR)-Gießharz ist und jedes Wulstelement (12, 15) eine Härte aufweist, die das Wulstelement (12 bzw. 15) biegesteif an den Scheibenrand (11) anpaßt.

4. Klappverdeck nach einem der Ansprüche 1 bis 3, **dadurch gekennzeichnet, daß** die Steckverbindungselemente (26, 30) verdeckstoffseitig wenigstens ein patrizenartiges Steckorgan (30) aufweisen und wenigstens eine Steckaufnahme (26) in dem Wulstelement (12) untergebracht ist.

5. Klappverdeck nach Anspruch 4, **dadurch gekennzeichnet, daß** das wenigstens eine Steckorgan (30) an einem mit dem inneren Verdeckbezug (31) randnah verbundenen Leistenelement (29) angeordnet ist.

6. Klappverdeck nach Anspruch 5, **dadurch gekennzeichnet, daß** das Leistenelement (29) als zumindest teilweise dem Scheibenrandverlauf sowie dessen innerer Raumwölbung folgender Bügel oder Rahmen ausgebildet ist, der in eine im wesentlichen schlaufen- oder taschenartige Aufnahme (32) des Randes oder Ausschnitts des inneren Verdeckbezugs (31) eingearbeitet ist.

7. Klappverdeck nach Anspruch 6, daß die schlaufen- oder taschenartige Aufnahme (32) von einem geklebten oder umgenähten Saum des inneren Verdeckstoffs (31) ausgebildet ist.

8. Klappverdeck nach Anspruch 6 oder 7, **dadurch gekennzeichnet, daß** die Aufnahme bzw. der Saum (32) mit wenigstens einem Fenster (34) zum Durchgriff des wenigstens einen Steckorgans (30) versehen ist.

9. Klappverdeck nach einem der Ansprüche 5 bis 8, , **dadurch gekennzeichnet, daß** jedes Steckorgan (30) werkstoffeinheitlich mit dem Leistenelement (29) ausgebildet ist und im wesentlichen lotrecht aus dessen Grundfläche hervorsteht.

10. Klappverdeck nach Anspruch 9, **dadurch gekennzeichnet, daß** das Leistenelement (29) aus Metall besteht und jedes Steckorgan (30) daraus ausgeklinkt und aus seiner Grundfläche herausgeformt ist.

11. Klappverdeck nach Anspruch 9, **dadurch gekennzeichnet, daß** das Leistenelement (29) mit seinen Steckorganen (30) aus Kunststoff besteht.

12. Klappverdeck nach einem der vorhergehenden Ansprüche, **dadurch gekennzeichnet, daß** in jede wulstelementseitige Steckorganaufnahme (26) eine eigensteife und/oder federelastische Halteklammer (35) für jedes Steckorgan (30) angeordnet, insbesondere eingearbeitet ist.

13. Klappverdeck nach Anspruch 12, **dadurch gekennzeichnet, daß** die Halteklammer (35) aus einem profilierten Metallteil besteht.

14. Klappverdeck nach Anspruch 12 oder 13, **dadurch gekennzeichnet, daß** die Halteklammer (35) mit einem an der Außenfläche des Wulstelements (12) anliegenden Flanschelement (36) versehen ist, das eine Anlagefläche für das Leistenelement (29) bereitstellt.

15. Klappverdeck nach Anspruch 14, **dadurch gekennzeichnet, daß** sich das Flanschelement (36) um den zum inneren Verdeckstoff (31) führenden Rand des Wulstelements (12) hinwegerstreckt und eine Anlage für eine Momentenstütze des Leistenelements (29) ausbildet, welche als mit dem Leistenelement (29) fest verbundener Steg oder Lappen (37) ausgebildet ist.

16. Klappverdeck nach einem der vorherigen Ansprüche, **dadurch gekennzeichnet, daß** die wenigstens eine Steckaufnahme (26) im Wulstelement (12) mit zumindest geringem Abstand vom Scheibenrand (11) sowie im Bereich des im Wulstelement (12) verankerten Randes (14) des äußeren Verdeckstoffs (13) angeordnet ist.

17. Klappverdeck nach einem der vorhergehenden Ansprüche, **dadurch gekennzeichnet, daß** jeweils mehrere Steckorgane (30) sowie daran angepaßte Steckorganaufnahmen (26) längs des Scheibenrandes (11) mit Abstand voneinander vorgesehen sind.

## Claims

1. Folding hood for motor vehicles such as convertibles or the like, comprising an outer hood cover (13) and an inner hood cover (31), the so-called headlining, and comprising at least one window pane (10) disposed in a cutout of the outer hood cover (13), **characterized in that** the window pane (10) is connected mechanically in a fixed and sealed manner to the outer hood material (13) by means of a cast-resin bead element (12), which borders the edge (14) of the cutout in the outer hood cover (13) and the edge (11) of the window pane (10), and that the inner hood cover (31) extends with its edge at least over a sub-portion of the bead element (12) parallel thereto or with the edge of a cutout provided therein circumferentially relative thereto and is fixed by means of plug-in connection elements (26, 30) to the bead element (12).

2. Folding hood according to the preamble of claim 1, **characterized in that** the window pane (10) is connected mechanically in a fixed and sealed manner to the outer hood material (13) by means of cast-resin bead elements (12, 15), which are detachably connected to one another and of which a first bead element (15) borders the edge of the window pane (10) and a second bead element (12) borders the cutout edge (14) of the outer hood cover (13), and that the inner hood cover (31) extends with its edge at least over a sub-portion of the first bead element (12) parallel thereto or with the edge of a cutout provided therein circumferentially relative thereto and is fixed by means of plug-in connection elements (26, 30) to the first bead element (12).

3. Folding hood according to claim 1, **characterized in that** the casting resin is a polyurethane (PUR) casting resin and each bead element (12, 15) has a hardness that adapts the bead element (12 and/or 15) in a flexurally stiff manner to the window pane edge (11).

4. Folding hood according to one of claims 1 to 3, **characterized in that** the plug-in connection elements (26, 30) at the hood material side comprise at least one male-die-like plug organ (30) and at least one plug receiver (26) is provided in the bead element (12).

5. Folding hood according to claim 4, **characterized in that** the at least one plug organ (30) is disposed on a strip element (29) connected to the inner hood cover (31) close to the edge.

6. Folding hood according to claim 5, **characterized in that** the strip element (29) is designed as a bow or frame, which at least partially follows the edge shape as well as the inner space curvature of the window pane and which is incorporated into a substantially loop- or pocket-like receiver (32) of the edge or cutout of the inner hood cover (31).

7. Folding hood according to claim 6, that the loop- or pocket-like receiver (32) is formed by a glued or stitched-around hem of the inner hood material (31).

8. Folding hood according to claim 6 or 7, **characterized in that** the receiver and/or the hem (32) is provided with at least one window (34) for penetration by the at least one plug organ (30).

9. Folding hood according to one of claims 5 to 8, **characterized in that** each plug organ (30) is formed uniformly in terms of material with the strip element (29) and projects substantially vertically from the base thereof.

10. Folding hood according to claim 9, **characterized in that** the strip element (29) is made of metal and each plug organ (30) is notched and formed out of the base thereof.

11. Folding hood according to claim 9, **characterized in that** the strip element (29) with its plug organs (30) is made of plastics material.

12. Folding hood according to one of the preceding claims, **characterized in that** disposed, in particular incorporated into each bead-element-side plug organ receiver (26) is an inherently stiff and/or spring-elastic retaining clamp (35) for each plug organ (30).

13. Folding hood according to claim 12, **characterized in that** the retaining clamp (35) comprises a shaped metal part.

14. Folding hood according to claim 12 or 13, **characterized in that** the retaining clamp (35) is provided with a flange element (36), which lies against the outer surface of the bead element (12) and provides a contact surface for the strip element (29).

15. Folding hood according to claim 14, **characterized in that** the flange element (36) extends around the edge of the bead element (12) leading to the inner hood material (31) and forms a contact surface for a moment support of the strip element (29), which moment support takes the form of a web or lug (37) connected in a fixed manner to the strip element (29).

16. Folding hood according to one of the preceding claims, **characterized in that** the at least one plug receiver (26) in the bead element (12) is disposed at least at a slight distance from the window pane edge (11) as well as in the region of the edge (14) of the outer hood material (13) anchored in the bead element (12).

17. Folding hood according to one of the preceding claims, **characterized in that** in each case a plurality of plug organs (30) and plug organ receivers (26) adapted thereto are provided at intervals along the window pane edge (11).

## Revendications

1. Toit pliant pour véhicules automobiles, tels que des cabriolets ou analogues, avec un revêtement de capote extérieur (13) et un revêtement de capote intérieur (31), ce que l'on appelle le pavillon, ainsi qu'avec au moins avec une vitre (10), disposée dans une découpure du revêtement de capote extérieur (13), **caractérisé en ce que** la vitre (10) est reliée, de façon mécaniquement rigide et étanche, au matériau de revêtement de capote extérieur (13), à l'aide d'un élément formant bourrelet (12) en résine moulée, qui enchâsse le bord (14) de la découpure ménagée dans le revêtement de capote extérieur (13) et le bord (11) de la vitre (10), et **en ce que**, au moins sur un tronçon partiel de l'élément formant bourrelet (12), le revêtement de capote intérieur (31) est guidé de façon que son bord s'étende parallèlement à une découpure prévue en lui, ou s'étende en pourtour de celle-ci, et est fixé sur l'élément formant bourrelet (12) à l'aide d'éléments de liaison par emboîtement (26, 30).

2. Toit pliant selon le préambule de la revendication 1, **caractérisé en ce que** la vitre (10) est reliée, de façon mécaniquement rigide et étanche, au revêtement de capote extérieur (13), à l'aide d'éléments formant bourrelets (12, 15) en résine moulée, reliés ensemble de façon désolidarisable, éléments dont un premier élément formant bourrelet (15) enchâsse le bord de la vitre (10) et un deuxième élément formant bourrelet (12) enchâsse le bord de découpure (14) du revêtement de capote extérieur (13), et **en ce que**, au moins sur un tronçon partiel de l'élément formant bourrelet (12), le revêtement de capote intérieur (31) est guidé de façon que son bord s'étende parallèlement à une découpure prévue en lui, ou s'étende en pourtour de celle-ci, et est fixé sur l'élément formant bourrelet (12) à l'aide d'éléments de liaison par emboîtement (26, 30).

3. Toit pliant selon la revendication 1, **caractérisé en ce que** la résine moulée est une résine moulée de type polyuréthane (PUR) et chaque élément formant bourrelet (12, 15) présente une dureté qui permet d'adapter, avec une rigidité en flexion, l'élément formant bourrelet (12 ou 15) au bord de vitre (11).

4. Toit pliant selon l'une des revendications 1 à 3, **caractérisé en ce que** les éléments de liaison par emboîtement (26, 30) présentent du côté du matériau de capote au moins un organe d'enfichage (30) de type mâle, et au moins un logement d'emboîtement (26) est logé dans l'élément formant bourrelet (12).

5. Toit pliant selon la revendication 4, **caractérisé en ce que** le au moins un organe d'emboîtement (30) est disposé sur un élément en forme de bande (29), relié, à proximité de la bordure, au revêtement de capote intérieur (31).

6. Toit pliant selon la revendication 5, **caractérisé en ce que** l'élément formant bande (29) est réalisé sous la forme d'étrier ou de cadre, suivant au moins en partie l'allure du bord de vitre ainsi que son bombement tridimensionnel intérieur, étrier ou cadre creusé dans un logement (32), essentiellement du genre d'une boucle ou d'une poche, du bord ou de la découpure du revêtement de capote intérieur (31).

7. Toit pliant selon la revendication 6, **caractérisé en ce que** le logement (32) du genre d'une boucle ou d'une poche est réalisé à partir d'un ourlet, collé ou rabattu et cousu, du matériau de capote intérieur (31).

8. Toit pliant selon la revendication 6 ou 7, **caractérisé en ce que** le logement, respectivement l'ourlet (32), est muni d'au moins une fenêtre (34), devant laisser le passage d'au moins un organe d'emboîtement (30).

9. Toit pliant selon l'une des revendications 5 à 8, **caractérisé en ce que** chaque organe d'emboîtement (30) est réalisé de façon unitaire, quant au matériau, avec l'élément en forme de bande (29) et ressort de façon sensiblement verticale hors de cette face de base.

10. Toit pliant selon la revendication 9, **caractérisé en ce que** l'élément en forme de bande (29) est formé de métal, et chaque organe d'emboîtement (30) est obtenu à partir de celui-ci, par moulage, et est formé à partir de sa face de base.

11. Toit pliant selon la revendication 9, **caractérisé en ce que** l'élément en forme de bande (29), avec ses organes d'emboîtement (30), est formé de matière synthétique.

12. Toit pliant selon l'une des revendications précédentes, **caractérisé en ce que** dans chaque logement d'organe d'emboîtement (26), situé du côté de l'élément formant bourrelet, est disposée, en particulier par un creusement avec enlèvement de matière, pour chaque organe d'emboîtement (30), une pince de maintien (35) ayant une rigidité propre et/ou ayant l'élasticité d'un ressort.

13. Toit pliant selon la revendication 12, **caractérisé en ce que** la pince de maintien (35) est formée d'une pièce métallique profilée.

14. Toit pliant selon la revendication 12 ou 13,
**caractérisé en ce que** la pince de maintien (35) est munie d'un élément formant bride (36) en appui sur la face extérieure de l'élément formant bourrelet (12) et fournissant une face d'appui à l'élément formant bande (29).

15. Toit pliant selon la revendication 14, **caractérisé en ce que** l'élément formant bride (36) s'étend autour du bord, guidant par rapport au matériau de capote intérieur (31), de l'élément formant bourrelet (12), et forme un appui pour un soutien, vis-à-vis des couples, de l'élément formant bande (29), qui est réalisé sous la forme de nervure ou de languette (37), reliée rigidement à l'élément formant bande (29).

16. Toit pliant selon l'une des revendications précédentes, **caractérisé en ce que** le au moins un logement d'emboîtement (26), ménagé dans l'élément formant bourrelet (12), est disposé avec au moins un faible espacement vis-à-vis du bord de vitre (11), ainsi que dans la zone du bord (14), ancré dans l'élément formant bourrelet (12), du matériau de capote extérieur (13).

17. Toit pliant selon l'une des revendications précédentes, **caractérisé en ce que**, chaque fois, plusieurs organes d'emboîtement (30), ainsi que des logements d'organe d'emboîtement (26) leur étant adaptés, sont prévus à distance les uns des autres le long du bord de vitre (11).
